## Europäisches Patentamt
## European Patent Office
## Office européen des brevets

(11) Veröffentlichungsnummer: **0 202 532**
**B1**

(12) **EUROPÄISCHE PATENTSCHRIFT**

(45) Veröffentlichungstag der Patentschrift: **24.10.90**

(21) Anmeldenummer: **86106151.3**

(22) Anmeldetag: **06.05.86**

(51) Int. Cl.⁵: **B 32 B 27/32, B 32 B 31/24**

(54) Nicht siegelbare, biaxial orientierte Mehrschichtfolie aus Propylenpolymeren, Verfahren zur Herstellung der Folie und ihre Verwendung.

(30) Priorität: **17.05.85 DE 3517795**

(43) Veröffentlichungstag der Anmeldung:
**26.11.86 Patentblatt 86/48**

(45) Bekanntmachung des Hinweises auf die
Patenterteilung:
**24.10.90 Patentblatt 90/43**

(84) Benannte Vertragsstaaten:
**BE DE FR GB IT NL**

(56) Entgegenhaltungen:
**EP-A-0 027 586**
**EP-A-0 135 178**
**EP-A-0 182 463**
**EP-A-0 184 094**
**GB-A- 938 729**

(73) Patentinhaber: **HOECHST**
**AKTIENGESELLSCHAFT**
**Postfach 80 03 20**
**D-6230 Frankfurt am Main 80 (DE)**

(72) Erfinder: **Crass, Günther**
**Bachstrasse 7**
**D-6204 Taunusstein 4 (DE)**
Erfinder: **Bothe, Lothar, Dr.**
**Am Heiligenhaus 9**
**D-6500 Mainz-Gonsenheim (DE)**

**Beschreibung**

Die Erfindung betrifft eine nicht siegelbare, biaxial orientierte Mehrschichtfolie aus Propylenpolymeren mit einer Basisschicht und einer oder zwei Deckschichten. Die Erfindung betrifft ferner ein Verfahren zur Herstellung der Folie und ihre Verwendung.

Die derzeit bekannten nicht siegelbaren, biaxial orientierten Mehrschichtfolien aus Propylenpolymeren, die aus einer Basisschicht und einer oder zwei Deckschichten bestehen (das heißt, die im wesentlichen aus Propylenpolymeren bestehende Basisschicht ist ein- oder beidseitig mit im wesentlichen aus Propylenpolymeren bestehenden Deckschichten versehen), weisen insbesondere den Nachteil auf, daß sie hinsichtlich Gleit- und Antiblockeigenschaften bei gleichzeitig guter Antistatik und hoher Transparenz nicht zufriedenstellend sind. Sie lassen darüber hinaus auch an Kratzfestigkeit, einer weiteren wichtigen Eigenschaft, mehr oder weniger zu wünschen übrig.

Es sind zwar schon zahlreiche Versuche unternommen worden, um Polypropylen-Mehrschichtfolien mit verbesserten Eigenschaften zu erhalten, indem man in die Deckschichten Additive inkorporiert hat, durch welche diese Eigenschaften erreicht werden sollten. So ist bereits empfohlen worden, in die Deckschichten eine wirksame Menge von einem thermoplastischen Harz, dessen Schmelzpunkt höher liegt als der des Polypropylens (unverträgliches thermoplastisches Harz), oder von einem anorganischen Pigment einzuarbeiten. Als anorganische Pigmente werden Aluminiumoxid, Siliciumdioxid, Titandioxid, synthetischer Zeolith und dergleichen sowie Mikroglasperlen genannt. Alle diese Folien vermögen die derzeitigen Forderungen nicht zu erfüllen.

In einer neueren Druckschrift, der EP-A-0 124 310, wird eine nicht siegelbare, biaxial orientierte Mehrschichtfolie aus Propylenpolymeren beschrieben, die gute Gleit- und Antiblockeigenschaften und gleichzeitig auch eine hohe Transparenz aufweisen soll. Sie besteht aus einer Basisschicht und mindestens einer Deckschicht, wobei die Deckschichten als eigenschaftsverbesserndes Additiv ein fein zerteiltes anorganisches Pigment wie Siliciumdioxid, Aluminiumsilicat, Natrium-Aluminiumsilicat und/oder Ruß in einer solchen Menge enthalten, daß die biaxial gestreckte Mehrschichtfolie keine nennenswerte Trübung mehr aufweist. Als Maß für die mittlere Teilchengröße des Pigmentes werden 0,2 bis 5 µm angegeben. Die Gestalt (Form) der Teilchen des Pigmentes wird als nicht kritisch angesehen.

Dieser Polypropylen-Mehrschichtfolie mangelt es — abgesehen davon, daß auch die Gleit- und Antiblockwerte noch zu wünschen übrig lassen — insbesondere an einer ausreichenden Antistatik und Kratzfestigkeit. Sie kann auch, ebenso wie alle anderen derzeit bekannten, nicht siegelbaren, orientierten Mehrschichtfolien aus Propylenpolymeren nicht einer beidseitigen Coronabehandlung unterworfen werden, weil dabei das Antiblockverhalten derart vermindert wird, daß es zum Verblocken (Kleben) der Folie auf der Folienrolle kommt. Ein derartiges Verkleben der aufeinanderliegenden Folienflächen führt häufig nicht nur zu einem Verdehnen oder Abreißen der Folie, es kann sogar das Abrollen der Folie unmöglich machen.

Es sind auch siegelbare, biaxial orientierte Mehrschichtfolien aus Propylenpolymeren mit einem zwei- oder dreischichtigen Aufbau bekannt, die in den Siegelschichten ein oder mehrere Additive enthalten, um gute Gleiteigenschaften und insbesondere eine gute Maschinengängigkeit auf schnellaufenden Verpackungsmaschinen, als der wichtigsten Eigenschaft, zu erreichen. Diese Folien, die nicht Gegenstand der vorliegenden Erfindung sind, bilden nicht nur eine eigene Gruppe, sie sind auch für wesentlich andere Einsatzzwecke gedacht als die nicht siegelbaren, orientierten Mehrschichtfolien.

Der Erfindung liegt die Aufgabe zugrunde, eine nicht siegelbare, biaxial orientierte Mehrschichtfolie der eingangs genannten Art zur Verfügung zu stellen, die alle in Rede stehenden Eigenschaften aufweist. Sie soll also gute. Gleiteigenschaften und insbesondere gute Antiblockeigenschaften, eine gute Optik (das heißt, sehr geringe Trübung und eine hohe Transparenz), eine gute Antistatik und eine hohe Kratzfestigkeit aufweisen und darüber hinaus so ausgebildet sein, daß diese Eigenschaften erhalten bleiben, wenn die Folie einer Coronabehandlung unterworfen wird, mit der insbesondere eine verbesserte Bedruckbarkeit und eine verbesserte Haftung von Klebstoffen und dergleichen erreicht werden soll.

Die erfindungsgemäße nicht siegelbare, biaxial orientierte Mehrschichtfolie aus Propylenpolymeren mit einer Basisschicht und einer oder zwei Deckschichten ist dadurch gekennzeichnet, daß die Basisschicht und die Deckschicht oder die Deckschichten im wesentlichen aus einem Propylenhomopolymeren bestehen und mindestens eine Deckschicht eine Additivkombination bestehend aus

a) 0,2 bis 1,0 Gew.-% von einem langkettigen aliphatischen Amin,
b) 0,2 bis 1,0 Gew.-% von einem Polydialkylsiloxan und
c) 0,1 bis 1,0 Gew.-% von einem plättchenförmigen anorganischen Pigment

enthält, wobei die Plättchen des Pigmentes im wesentlichen parallel zur Oberfläche der Deckschicht angeordnet sind, Gewichtsprozente bezogen auf das Gesamtgewicht der Deckschicht.

Bei der erfindungsgemäßen Folie bestehen also sowohl die Basisschicht als auch die Deckschichten aus einem Propylenhomopolymeren. Die Basisschicht ist einseitig oder beidseitig beschichtet. Bei Vorliegen nur einer Deckschicht enthält diese die angegebene Additivkombination. Bei Vorliegen von zwei Deckschichten enthält mindestens eine der beiden die angegebene Additivkombination. Die andere Deckschicht kann frei von eigenschaftverbessernden Additiven sein oder derartige Additive enthalten.

2

Bezüglich des Aufbaus der erfindungsgemäßen Mehrschichtfolie ist jene Ausführungsform bevorzugt, die aus einer Basisschicht und zwei Deckschichten besteht. Bezüglich der Additivkombination ist es bevorzugt, daß beide Deckschichten die erfindungsgemäß einzusetzende Additivkombination enthalten.

Das Propylenhomopolymere, aus dem erfindungsgemäß die Basisschicht und die Deckschichten gebildet sind, ist vorzugsweise ein isotaktisches Polypropylen. Bevorzugte isotaktische Polypropylene sind solche, deren n-Heptanlöslicher Anteil höchstens 15 Gew.-%, vorzugsweise höchstens 8 Gew.-%, beträgt (der n-Heptan-lösliche Anteil von isotaktischen Polypropylenen liegt in der Regel im Bereich von 2 bis 10 Gew.-%), deren Schmelzpunkt mindestens 150°C beträgt (er liegt in der Regel bei 155 bis 170°C) und deren Schmelzindex (nach DIN 53 735) 0,5 g bis 8 g/10 min, vorzugsweise 1,5 g bis 4 g/10 min, bei 230°C und 21,18 N (2,16 kp) Belastung beträgt. Das Propylenhomopolymere der Deckschichten hat einen etwas höheren, vorzugsweise um 0,5 bis 1 g/10 min höheren, Schmelzindex als die Basisschicht.

Als Komponente a) der erfindungsgemäß vorgeschlagenen Additivkombination werden bevorzugt tertiäre aliphatische Amine mit einem gegebenenfalls ein- bis dreifach ungesättigten (geradkettigen) Alkylrest mit 10 bis 20 Kohlenstoffatomen, vorzugsweise 12 bis 18 Kohlenstoffatomen, eingesetzt. Besonders bevorzugt sind solche tertiären aliphatischen Amine, die den genannten Alkylrest und zwei Hydroxy-($C_2$—$C_4$)-Alkylreste aufweisen. Bevorzugte Vertreter davon sind die N,N-bis-(2-Hydroxyethyl)-Alkylamine mit einem $C_{10}$—$C_{20}$-, vorzugsweise $C_{12}$—$C_{18}$-Alkylrest. Die Menge an der Komponente a) beträgt vorzugsweise 0,4 bis 0,7 Gew.-%, bezogen auf die Schicht.

Die Komponente b) der erfindungsgemäß vorgeschlagenen Additivkombination ist ein Polydialkylsiloxan, vorzugsweise ein Polydi-($C_1$—$C_4$)-Alkylsiloxan, wobei das Polydimethylsiloxan besonders bevorzugt ist. Das Polydialkylsiloxan hat eine Viskosität von 1 000 bis 100 000 mm²/s bei 25°C, vorzugsweise 5 000 bis 50 000 mm²/s bei 25°C. Die Menge an der Komponente b) beträgt vorzugsweise 0,4 bis 0,7 Gew.-%, bezogen auf die Schicht.

Die Komponente c) der erfindungsgemäß vorgeschlagenen Additivkombination ist ein plättchenförmiges anorganisches Pigment. Der sogenannte Aspect Ratio der Plättchen, das ist das Verhältnis von Fläche zu Dicke (Partikelgeometrie-Wert), liegt normalerweise im Bereich von 2 bis 20, vorzugsweise 4 bis 10. Die mittlere Teilchengröße beträgt normalerweise 0,1 bis 4 μm, vorzugsweise 0,2 bis 1 μm, wobei das größte Teilchen <20 μm und das kleinste Teilchen >0,01 μm ist. Erfindungsgemäß werden also solche anorganischen Pigmente eingesetzt, die eine Blattstruktur (ein Schichtgitter) bilden. Silicate und Carbonate sind bevorzugt. Bei den Carbonaten handelt es sich in der Regel um Erdalkalicarbonate, gegebenenfalls mit Hydratwasser, wobei die Calciumcarbonate wie Hydrotalcit und die Magnesiumcarbonate bevorzugt sind (bei den Carbonaten sind andere Metalle, wenn überhaupt, so nur in unwesentlichen Mengen enthalten). Geeignete Silicate mit blattförmiger Struktur sind Alkali- oder Erdalkalimetallsilicate wie Anorthit und Apophyllit, Aluminiumsilicate (die auch Alkali- und/oder Erdalkalimetalle enthalten können) wie Kaolinit, Montmorillonit, Pyrophyllit und Glimmerarten, beispielsweise Muskowit und Margarit, und Magnesiumsilicate wie Antigorit (blätteriger Serpentin), Hectorit und Talk. Aluminiumsilicate sind bevorzugt.

Erfindungsgemäß sind die Plättchen des anorganischen Pigments parallel zur Oberfläche der Schicht angeordnet.

Die im Propylenhomopolymeren gleichmäßig verteilten Pigmentplättchen richten sich insbesondere bei der biaxialen Orientierung im wesentlichen waagerecht zur Folienebene aus und liegen somit in der fertigen Folie in der angegebenen parallelen Position vor.

Die Menge an der Komponente c) beträgt vorzugsweise 0,2 bis 0,6 Gew.-%, bezogen auf die Schicht.

Die Dicke der erfindungsgemäßen Mehrschichtfolie kann innerhalb weiter Grenzen variieren und richtet sich insbesondere nach dem beabsichtigten Einsatz. Sie ist normalerweise etwa 8 bis 50 μm, vorzugsweise 12 bis 40 μm, dick (Gesamtdicke), wobei die Dicke einer Deckschicht etwa 0,1 bis 2 μm ist, vorzugsweise 0,5 bis 1 μm.

Die erfindungsgemäße Mehrschichtfolie ist biaxial orientiert (streckorientiert), wobei das Längsstreckverhältnis vorzugsweise 4 bis 7:1 und das Querstreckverhältnis vorzugsweise 7 bis 10:1 beträgt.

Die Herstellung der erfindungsgemäßen Mehrschichtfolien aus Propylenpolymeren kann nach einem der an sich bekannten Verfahren vorgenommen werden. Dazu werden bekanntlich zunächst die den Schichten entsprechenden Mischungen (Formmassen) durch Mischen der einzelnen Komponenten in einem Mischer bereitet. Es versteht sich von selbst, daß bei der Bereitung der Mischungen mit der Additivkombination die einzelnen Additive in das Propylenhomopolymere gut eingemischt (eingearbeitet) werden, damit sie gleichmäßig verteilt vorliegen. Die Mehrschichtfolien können durch Coextrusion und anschließendes Streckorientieren hergestellt werden, durch nachträgliches Beschichten einer streckorientierten Folie (Basisfolie) oder durch Beschichten einer unorientierten Folie und anschließendes Streckorientieren.

Die Herstellung der erfindungsgemäßen Mehrschichtfolie erfolgt vorzugsweise nach dem Coextrusionsverfahren. Dabei werden die den Schichten der Folie entsprechenden Schmelzen durch eine Flachdüse coextrudiert, die coextrudierte Folie zur Verfestigung abgekühlt, die verfestigte Folie biaxial streckorientiert, in Längsrichtung vorzugsweise um das Vier- bis Siebenfache und in Querrichtung vorzugsweise um das Sieben- bis Zehnfache, und die biaxial streckorientierte Folie thermofixiert. Zunächst wird also das Polymere (die Mischung) entsprechend der Basisschicht bzw. der Deckschicht oder den Deckschichten in einem Extruder verflüssigt und komprimiert. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50°C gehalten werden, abgekühlt und verfestigt. Die so erhaltene Folie wird bei einer Temperatur unterhalb des Schmelzpunktes des eingesetzten Polymeren längsgestreckt. Die Längsstreckung wird vorzugsweise bei einer Folientemperatur von 120 bis 140°C durchgeführt. Die Querstreckung wird vorzugsweise bei einer Strecktemperatur von 160 bis 180°C durchgeführt. Die biaxiale Streckung kann simultan oder nacheinander vorgenommen werden, sie wird vorzugsweise nacheinander, und zwar zuerst längs und dann quer, vorgenommen. Das Längsstrecken wird man zweckmäßigerweise mit Hilfe zweier entsprechend dem angestrebten Streckverhältnis verschieden schnell laufender Walzen durchführen und das Querstrecken mit Hilfe eines entsprechenden Kluppenrahmens. Zur Thermofixierung (Wärmenachbehandlung) wird die Folie etwa 0,5 bis 10 Sekunden lang bei einer Temperatur von 150 bis 160°C gehalten.

Die erfindungsgemäße nicht siegelbare, biaxial streckorientierte Mehrschichtfolie kann einer Coronabehandlung unterworfen werden, um sie damit insbesondere gut bedruckbar und beschichtbar (beispielsweise mit Klebstoffen) zu machen. Es ist ein unerwartetes Ergebnis, daß es bei der erfindungsgemäßen Folie mit der angegebenen Additivkombination in den Deckschichten möglich ist, sie einer Coronabehandlung auszusetzen, ohne daß dabei irgendeine ihrer wertvollen Eigenschaften negativ beeinflußt wird. Nachdem in der Literatur darauf hingewiesen wird und eigene Versuche es bestätigt haben, daß das Gleit- und Antiblockverhalten von Polypropylenfolien bei einer Coronabehandlung beträchtlich verschlechtert wird und dies vor allem dann der Fall ist, wenn die Folie Antistatika enthält, ist das mit der Erfindung erzielte Ergebnis umso überraschender.

Zur Coronabehandlung der Folie, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden. Durch die Coronabehandlung wird die Oberflächenspannung von etwa 38 mN/m erzeugt.

Die erfindungsgemäße nicht siegelbare, biaxial orientierte Mehrschichtfolie aus Propylenpolymeren ist aufgrund ihres hervorragenden Eigenschaftsbildes und der Möglichkeit einer Coronabehandlung, ohne dieses Eigenschaftsbild zu beeinträchtigen, vielseitig verwendbar. Sie eignet sich für technische Anwendungen und für Verpackungszwecke. Die erfindungsgemäße Folie wird vorzugsweise als Kaschierfolie, Trennfolie, Beutelfolie, Klebebandträgerfolie oder als metallisierbare Folie oder Transfermetallisierungsfolie verwendet. Bei dem Einsatz der erfindungsgemäßen Folie als Transfermetallisierungsfolie hat sich überraschenderweise herausgestellt, daß die üblicherweise durch Blitzentladungen während des Aufdampfens der Metallschicht erzeugten, äußerst unerwünschten "Lichtenberg'schen Figuren" nicht in Erscheinung treten.

Die Erfindung wird nun an Beispielen noch näher erläutert.

Beispiele und Vergleichsbeispiele

Mit Hilfe des Coextrusionsverfahrens wurden jeweils aus einer Breitschlitzdüse von 280 mm Breite und 1,8 mm Spalthöhe bei einer Extrusionstemperatur von 260°C und einer Fördermenge von 70 kg/h 1 mm dicke ein-, zwei- und dreischichtige Folien extrudiert, wobei die Basisschicht jeweils aus einem isotaktischen Polypropylen mit einem n-Heptan-löslichen Anteil von 4,5 Gew.-%, einem Schmelzpunkt von 165°C und einem Schmelzflußindex von 2 g/10 min bei 230°C und 21,18 N (2,16 kp) Belastung (DIN 53 735) bestand und die Deckschicht oder die Deckschichten jeweils verschieden zusammengesetzt waren. Die coextrudierten Folien wurden nach Durchlaufen einer 20 mm langen Luftstrecke auf einer 30°C warmen Kühlwalze mit einem Durchmesser von 600 mm abgeschreckt, die mit einer Umfangsgeschwindigkeit von 4,5 m/min lief. Danach wurden die Folien von der Kühlwalze auf ein Walzentrio von ebenfalls 30°C und einer Umfangsgeschwindigkeit von ebenfalls 4,5 m/min übergeben und dann nach Erwärmung auf 130°C von einem weiteren Walzentrio um den Faktor 5 längsgestreckt. Anschließend wurden sie bei 175°C auf das Zehnfache in Querrichtung gestreckt. Die Thermofixierung erfolgte bei 160°C über eine Zeitspanne von 5 Sekunden. Danach erfolgte gegebenenfalls eine einseitige oder beidseitige Coronabehandlung. Die Basisschicht der erhaltenen Folien war jeweils 19 µm dick. Die Deckschichten hatten jeweils eine Dicke im Bereich von 0,5 bis 0,8 µm.

Beispiel 1

Die Folie hatte einen sogenannten ABA-Aufbau, d.h. die beiden Deckschichten (A) sind gleich und unterscheiden sich in der Zusammensetzung von der Basisschicht (B).

Basisschicht: Sie bestand aus einem isotaktischen Polypropylen wie oben angegeben.

Deckschichten: Sie bestanden aus einem isotaktischen Polypropylen mit einem n-Heptan-löslichen Anteil von 4,5 Gew.-%, einem Schmelzpunkt von 165°C und einem Schmelzflußindex von 3 g/10 min als Hauptbestandteil und aus

0,5 Gew.-% N,N-bis-(2-hydroxyethyl)-$C_{12}$—$C_{18}$-Alkylamin,

0,7 Gew.-% Polydimethylsiloxan mit einer Viskosität von 30 000 mm²/s bei 25°C und

0,4 Gew.-% von einem plättchenförmigen Aluminiumsilicat mit einem Aspect Ratio von 6; die mittlere

EP 0 202 532 B1

Teilchengröße (der mittlere Teilchendurchmesser) beträgt 0,55 µm, wobei die Teilchengröße <10 µm und >0,01 µm ist (Gewichtsprozente bezogen auf das Gesamtgewicht der Schicht).

Beispiel 2

Beispiel 1 wurde wiederholt; die Folie wurde einseitig coronabehandelt. Die Oberflächenbehandlungsintensität betrug 38 mN/m.

Beispiel 3

Beispiel 1 wurde wiederholt; die Folie wurde beidseitig coronabehandelt. Die Oberflächenbehandlungsintensität betrug jeweils 38 mN/m (bei allen nachstehenden Coronabehandlungen betrug die Behandlungsintensität ebenfalls immer 38 mN/m).

Beispiel 4

Die Folie hatte einen sogenannten AB-Aufbau, d.h. sie bestand aus einer Basisschicht (B) und einer Deckschicht (A); die Basisschicht ist also nur einseitig mit einer Deckschicht versehen.
Basisschicht: Sie bestand aus dem in Beispiel 1 angegebenen isotaktischen Polypropylen.
Deckschicht: Sie bestand aus den in Beispiel 1 für die Deckschichten angegebenen Komponenten.

Beispiel 5

Beispiel 4 wurde wiederholt; die Folie wurde auf der (freien) Oberfläche der Basisschicht coronabehandelt.

Beispiel 6

Beispiel 4 wurde wiederholt; die Folie wurde auf der Deckschicht-Oberfläche coronabehandelt.

Beispiel 7

Beispiel 4 wurde wiederholt; die Folie wurde beidseitig coronabehandelt.

Beispiel 8

Die Folie hatte einen sogenannten ABC-Aufbau, d.h. sie bestand aus drei in der Zusammensetzung unterschiedlichen Schichten, nämlich aus der Basisschicht (B) und den beiden Deckschichten (A) und (C).
Basisschicht: Sie bestand aus dem in Beispiel 1 angegebenen isotaktischen Polypropylen.
Deckschicht A: Sie bestand aus den in Beispiel 1 für die Deckschichten angegebenen Komponenten.
Deckschicht C: Sie bestand aus dem gleichen isotaktischen Polypropylen wie die Deckschicht A und enthielt von der Additivkombination der Deckschicht A nur die 0,4 Gew.-% Aluminiumsilicat, also kein Polydimethylsiloxan und kein Amin.

Beispiel 9

Beispiel 8 wurde wiederholt; die Folie wurde auf der Deckschicht gemäß Erfindung, das ist die Deckschicht A, coronabehandelt.

Beispiel 10

Beispiel 8 wurde wiederholt; die Folie wurde auf der Deckschicht C coronabehandelt.

Beispiel 11

Beispiel 8 wurde wiederholt; die Folie wurde beidseitig coronabehandelt.

Vergleichsbeispiel 1

Die Folie bestand lediglich aus der Basisschicht des Beispiels 1.

Vergleichsbeispiel 2

Vergleichsbeispiel 1 wurde wiederholt; die Folie wurde einseitig coronabehandelt. Die Oberflächenbehandlungsintensität betrug 38 mN/m.

Vergleichsbeispiel 3

Vergleichsbeispiel 1 wurde wiederholt; die Folie wurde beidseitig coronabehandelt. Die Oberflächenbehandlungsintensität betrug jeweils 38 mN/m (bei allen nachstehenden Coronabehandlungen betrug die Intensität ebenfalls immer 38 mN/m).

Vergleichsbeispiel 4

Die Folie bestand lediglich aus der Basisschicht des Beispiels 1; im Unterschied zu Vergleichsbeispiel 1 enthielt sie Additive, und zwar 0,4 Gew.-% des genannten Aluminiumsilicats, 0,2 Gew.-% Stearinsäureamid und 0,2 Gew.-% des genannten $C_{12}$—$C_{18}$-Alkylamins (Gewichtsprozente bezogen auf die Schicht).

5

Vergleichsbeispiel 5

Vergleichsbeispiel 4 wurde wiederholt; die Folie wurde einseitig coronabehandelt.

Vergleichsbeispiel 6

Vergleichsbeispiel 4 wurde wiederholt; die Folie wurde beidseitig coronabehandelt.

Vergleichsbeispiel 7

Die Folie hatte, wie in Beispiel 1, einen ABA-Aufbau.

Basisschicht: Sie entsprach der Basisschicht des Beispiels 1 mit dem Unterschied, daß sie auch Additive enthielt, und zwar 0,2 Gew.-% Stearinsäureamid und 0,2 Gew.-% des genannten $C_{12}$—$C_{18}$-Alkylamins.

Deckschichten: Sie entsprachen denen des Beispiels 1 mit dem Unterschied, daß sie lediglich die 0,4 Gew.-% Aluminiumsilicat, aber kein Polydimethylsiloxan und kein Amin enthielten (vgl. Deckschicht C des Beispiels 8).

Vergleichsbeispiel 8

Vergleichsbeispiel 7 wurde wiederholt; die Folie wurde einseitig coronabehandelt.

Vergleichsbeispiel 9

Vergleichsbeispiel 7 wurde wiederholt; die Folie wurde beidseitig coronabehandelt.

Vergleichsbeispiel 10

Die Folie hatte, wie in Beispiel 1, einen ABA-Aufbau.

Basisschicht: Sie entsprach der Basisschicht des Beispiels 1.

Deckschichten: Sie entsprachen den Deckschichten des Vergleichsbeispiels 7.

Vergleichsbeispiel 11

Vergleichsbeispiel 10 wurde wiederholt; die Folie wurde einseitig coronabehandelt.

Vergleichsbeispiel 12

Vergleichsbeispiel 10 wurde wiederholt; die Folie wurde beidseitig coronabehandelt.

An den Folien der Beispiele und Vergleichsbeispiele wurden die Antiblockeigenschaften, die Gleiteigenschaften, die Optik (der Glanz und die Trübung), die Antistatik und die Kratzfestigkeit bestimmt.

Die Bestimmung der Antiblockeigenschaft erfolgte durch Beurteilung des Abwickelverhaltens einer Folienrolle auf einer Schneidemaschine der Firma Kampf (Bundesrepublik Deutschland), Typ U 625, mit 500 m/min.

Die Bestimmung der Gleiteigenschaft erfolgt nach DIN 53 375.

Die Bestimmung des Glanzes erfolgte nach DIN 67 530 unter Verwendung eines Reflektometers RB der Firma Dr. Lange (Bundesrepublik Deutschland).

Die Bestimmung der Trübung erfolgte nach ASTM-D 1003-52, wobei anstelle einer 4°-Lochblende eine 1°-Spaltblende eingesetzt und die Trübung bei vier übereinanderliegenden Folienlagen gemessen wurde (die vier Lagen wurden gewählt, weil man dadurch den optimalen Meßbereich des Gerätes ausnutzt.

Die Bestimmung der Antistatik erfolgte durch den Aschetest. Die Folie wurde durch dreimaliges Reiben mit einem Wolltuch in einer Richtung aufgeladen. Das Testergebnis wird negativ beurteilt, wenn Zigarettenasche aus ca. 3 cm Entfernung von der aufgeladenen Folie angezogen wird.

Die Bestimmung der Kratzfestigkeit erfolgte nach DIN 53 754. Es wurde das Abrieb-Meßgerät 11 671 der Firma Frank (Bundesrepublik Deutschland) benutzt, wobei Reibräder der Marke CALIBRASE® CS-10F der Firma Teledyne (USA) eingesetzt wurden, die mit 250 g belastet waren. Unter Kratzfestigkeit bzw. Kratzempfindlichkeit versteht man die Trübungszunahme der verkratzten Folie im Vergleich zur Originalfolie nach 50 Umdrehungen des Probentellers.

In der nachfolgenden Tabelle sind die Ergebnisse der Prüfungen zusammengefaßt.

TABELLE

| Beispiel/ Vergleichs- beispiel (VB) No. | Anti- blocking | Gleitver- halten | Optik | Anti- statik | Kratz- festig- keit |
|---|---|---|---|---|---|
| 1 | ++ | ++ | ++ | ++ | ++ |
| 2 | ++ | ++ | ++ | ++ | ++ |
| 3 | ++ | ++ | ++ | ++ | ++ |
| 4 | ++ | ++ | ++ | ++ | ++ |
| 5 | ++ | ++ | ++ | ++ | ++ |
| 6 | ++ | ++ | ++ | ++ | ++ |
| 7 | ++ | ++ | ++ | ++ | ++ |
| 8 | ++ | ++ | ++ | ++ | ++ |
| 9 | ++ | ++ | ++ | ++ | ++ |
| 10 | ++ | ++ | ++ | ++ | ++ |
| 11 | ++ | ++ | ++ | ++ | ++ |
| VB | | | | | |
| 1 | -- | -- | ++ | -- | -- |
| 2 | -- | -- | ++ | -- | -- |
| 3 | -- | -- | ++ | -- | -- |
| 4 | ++ | +- | -- | ++ | +- |
| 5 | ++ | +- | -- | ++ | +- |
| 6 | -- | +- | -- | ++ | +- |
| 7 | ++ | +- | +- | +- | +- |
| 8 | ++ | +- | +- | +- | +- |
| 9 | -- | +- | +- | +- | +- |
| 10 | ++ | +- | ++ | -- | +- |
| 11 | ++ | +- | ++ | -- | +- |
| 12 | -- | +- | ++ | -- | +- |

++ sehr gut        +- mäßig        -- schlecht

Die erfindungsgemäßen nicht siegelbaren Mehrschichtfolien aus Propylenpolymeren sind also in all den wichtigen Eigenschaften, die für solche Folien gefordert werden, sehr gut. Was sie besonders auszeichnet, ist die Tatsache, daß sie coronabehandelt werden können und trotzdem das sehr gute Antiblock- und Gleitverhalten, und damit ihre sehr gute Konfektionierbarkeit, beibehalten.

**Patentansprüche**

1. Nicht siegelbare, biaxial orientierte Mehrschichtfolie aus Propylenpolymeren mit einer Basisschicht und einer oder zwei Deckschichten, dadurch gekennzeichnet, daß die Basisschicht und die Deckschicht oder die Deckschichten im wesentlichen aus einem Propylenhomopolymeren bestehen und mindestens eine Deckschicht eine Additivkombination bestehend aus

a) 0,2 bis 1,0 Gew.-% von einem langkettigen aliphatischen Amin,
b) 0,2 bis 1,0 Gew.-% von einem Polydialkylsiloxan und
c) 0,1 bis 1,0 Gew.-% von einem plättchenförmigen anorganischen Pigment

7

enthält, wobei die Plättchen des Pigmentes im wesentlichen parallel zur Oberfläche der Deckschicht angeordnet sind, Gewichtsprozente bezogen auf das Gesamtgewicht der Deckschicht.

2. Folie nach Anspruch 1, dadurch gekennzeichnet, daß das Propylenhomopolymere ein isotaktisches Polypropylen ist mit einem n-Heptan-löslichen Anteil von höchstens 15 Gew.-%, einem Schmelzpunkt von mindestens 150°C und einem Schmelzindex von 0,5 g bis 8 g/10 min bei 230°C und 21,18 N (2,16 kp) Belastung.

3. Folie nach einem der Ansprüche 1 oder 2, dadurch gekennzeichnet, daß die Komponente a) der Additivkombination ein N,N-bis-(hydroxy-$C_2$—$C_4$-Alkyl)-$C_{12}$—$C_{18}$-Alkylamin ist.

4. Folie nach einem oder mehreren der Ansprüche 1 bis 3, dadurch gekennzeichnet, daß die Komponente b) ein Polydi($C_1$—$C_4$)alkylsiloxan ist, das eine Viskosität von 1 000 bis 100 000 mm²/s bei 25°C hat.

5. Folie nach einem oder mehreren der Ansprüche 1 bis 4, dadurch gekennzeichnet, daß die Komponente c) ein plättchenförmiges Calciumcarbonat oder Magnesiumcarbonat oder ein plättchenförmiges Aluminiumsilicat ist, wobei die Plättchen einen Aspect Ratio von 2 bis 20 aufweisen und die mittlere Teilchengröße 0,1 bis 4 µm beträgt, wobei das größte Teilchen <20 µm und das kleinste Teilchen >0,01 µm ist.

6. Folie nach einem oder mehreren der Ansprüche 1 bis 5, dadurch gekennzeichnet, daß sie aus einer Basisschicht und zwei Deckschichten besteht.

7. Folie nach einem oder mehreren der Ansprüche 1 bis 6, dadurch gekennzeichnet, daß beide Deckschichten die Additivkombination enthalten.

8. Folie nach einem oder mehreren der Ansprüche 1 bis 7, dadurch gekennzeichnet, daß sie 8 bis 50 µm dick ist, wobei die Dicke einer Deckschicht 0,1 bis 2 µm beträgt.

9. Verfahren zur Herstellung der Folie nach Anspruch 1, dadurch gekennzeichnet, daß man die den Schichten der Folie entsprechenden Schmelzen durch eine Flachdüse coextrudiert, die coextrudierte Folie zur Verfestigung abkühlt, die verfestigte Folie biaxial streckorientiert und die biaxial streckorientierte Folie thermofixiert.

10. Verfahren nach Anspruch 9, dadurch gekennzeichnet, daß die biaxial streckorientierte und hitzefixierte Folie ein- oder beidseitig einer Coronabehandlung unterworfen wird.

11. Verwendung der Folie nach einem der Ansprüche 1 bis 8 als Kaschierfolie, Trennfolie oder als metallisierbare Folie.

## Revendications

1. Pellicule multicouche non soudable orientée biaxialement, à base de polymère de propylène, comportant une couche de base et une ou deux couches de recouvrement, caractérisée en ce que la couche de base et la couche de recouvrement ou les couches de recouvrement sont essentiellement constituées d'un homopolymère de propylène, et au moins une couche de recouvrement contient une association d'additifs constituée de

a) 0,2 à 1,0% en poids d'une amine aliphatique à longue chaîne,
b) 0,2 à 1,0% en poids d'un polydialkylsiloxane et
c) 0,1 à 1,0% en poids d'un pigment minéral lamellaire,

les lamelles du pigment étant disposées pratiquement parallèlement à la surface de la couche de recouvrement, les pourcentages en poids étant donnés par rapport au poids total de la couche de recouvrement.

2. Pellicule selon la revendication 1, caractérisée en ce que l'homopolymère de propylène est un polypropylène isotactique ayant une fraction soluble dans le n-heptane constituant au maximum 15% en poids, un point de fusion d'au moins 150°C et un indice de fluidité de 0,5 g à 8 g/10 min. à 230°C et sous charge de 21,18 N (2,16 kp).

3. Pellicule selon la revendication 1 ou 2, caractérisée en ce que le composant a) de l'association d'additifs est une N,N-bis-[hydroxy-alkyl($C_2$—$C_4$)]-alkyl($C_{12}$—$C_{18}$)-amine.

4. Pellicule selon une ou plusieurs des revendications 1 à 3, caractérisée en ce que le composant b) est un polydialkyl($C_1$—$C_4$)-siloxane qui a une viscosité de 1 000 à 100 000 mm²/s à 25°C.

5. Pellicule selon une ou plusieurs des revendications 1 à 4, caractérisée en ce que le composant c) est un carbonate de calcium ou carbonate de magnésium lamellaire ou un silicate d'aluminium lamellaire, les lamelles présentant un rapport de forme de 2 à 20 et la taille moyenne des particules allant de 0,1 à 4 µm, la plus grosse particule ayant une taille <20 µm et la plus petite particule ayant une taille >0,01 µm.

6. Pellicule selon une ou plusieurs des revendications 1 à 5, caractérisée en ce qu'elle est constituée d'une couche de base et de deux couches de recouvrement.

7. Pellicule selon une ou plusieurs des revendications 1 à 6, caractérisée en ce que les deux couches de recouvrement contiennent l'association d'additifs.

8. Pellicule selon une ou plusieurs des revendications 1 à 7, caractérisée en ce qu'elle a une épaisseur de 8 à 50 µm, l'épaisseur d'une couche de recouvrement étant de 0,1 à 2 µm.

9. Procédé pour la fabrication de la pellicule selon la revendication 1, caractérisé en ce que l'on coextrude à travers une filière plate les masses fondues correspondant aux couches de la pellicule, la pellicule coextrudée est refroidie pour la solidification, la pellicule solidifiée est orientée biaxialement par étirage et la pellicule orientée biaxialement par étirage est thermofixée.

10. Procédé selon la revendication 9, caractérisé en ce que la pellicule orientée biaxialement par étirage et thermofixée est soumise d'un côté ou des deux à un traitement par effet couronne.

11. Utilisation de la pellicule selon l'une des revendications 1 à 8, en tant que pellicule de doublage, pellicule de séparation ou en tant que pellicule métallisable.

## Claims

1. Non-sealable, biaxially oriented multi-layer film of propylene polymers, comprising a base layer and one or two covering layers, wherein the base layer and the covering layer or covering layers essentially comprise a propylene homopolymer and at least one covering layer contains a combination of additives composed of

a) from 0.2 to 1.0% by weight of a long-chain aliphatic amine,
b) from 0.2 to 1.0% by weight of a polydialkylsiloxane, and
c) from 0.1 to 1.0% by weight of a platelet-shaped inorganic pigment,

the platelets of the pigment being disposed substantially parallel to the surface of the covering layer; percentages by weight based on the total weight of the covering layer.

2. A film as claimed in claim 1, wherein the propylene homopolymer is an isotactic polypropylene with an n-heptane-soluble amount of not more than 15% by weight, a melting point of at least 150°C and a melt index of from 0.5 g to 8 g/10 min at 230°C and under a load of 21.18 N (2.16 kp).

3. A film as claimed in any of claims 1 or 2, wherein component a) of the combination of additives is an N,N-bis-(hydroxy-$C_2$ to $C_4$-alkyl)-$C_{12}$ to $C_{18}$-alkylamine.

4. A film as claimed in any one or several of claims 1 to 3, wherein component b) is a polydi($C_1$ to $C_4$)alkylsiloxane which has a viscosity of from 1,000 to 100,000 $mm^2/s$ at 25°C.

5. A film as claimed in any one or several of claims 1 to 4, wherein component c) is a platelet-shaped calcium carbonate or magnesium carbonate or a platelet-shaped aluminum silicate, the platelets having an aspect ratio of from 2 to 20 and the average particle size ranging from 0.1 to 4 μm, the largest particle being <20 μm and the smallest particle >0.01 μm.

6. A film as claimed in any one or several of claims 1 to 5, which comprises a base layer and two covering layers.

7. A film as claimed in any one or several of claims 1 to 6, wherein both covering layers contain the combination of additives.

8. A film as claimed in any one or several of claims 1 to 7, which is from 8 to 50 μm thick, the thickness of one covering layer being from 0.1 to 2 μm.

9. A process for the production of the film as claimed in claim 1, wherein the melts corresponding to the layers of the film are coextruded through a flat sheet die, the coextruded film is cooled for solidification, the solidified film is biaxially draw oriented and the biaxially draw oriented film is heat set.

10. A process as claimed in claim 9, wherein the biaxially draw oriented and heat set film is subjected to a corona treatment on one or both sides.

11. Use of the film as claimed in any of claims 1 to 8, as a laminating film, an interleaving film or a metallizable film.